# EUROPEAN PATENT APPLICATION

(11) **EP 3 647 165 A1**
(43) Date of publication of application: **06.05.2020**
(21) Application number: 18203991.7
(22) Date of filing: 01.11.2018
(51) Int. Cl.: B62D 25/00, B62D 29/00, B62D 29/04, B60K 1/04, B62D 25/02, B62D 25/20

(54) **CHASSIS FOR AN ELECTRIC VEHICLE**

(71) Applicant: Electric Vehicles Enterprise Ltd., Hong Kong (HK)
(72) Inventor: LEUNG, Wai Sing Wilson, Hong Lok Yuen, Taipo (HK)
(74) Representative: Stevenson-Hill, Jack Patrick

(57) **Abstract**

A chassis (100) for an electric vehicle (10), comprising a left side frame (110L) and a right side frame (110R) made of a material comprising carbon fibre, at least one lower structural member (120) connected with and extending across the left side frame (110L) and the right side frame (110R), and a plurality of upper structural members (130) connected with and extending across the left side frame (110L) and the right side frame (110R). The lower structural member (120) provides support for one or more rechargeable battery packs (B1/B2).

## Description

The present invention relates to a chassis for an electric vehicle.

### BACKGROUND OF THE INVENTION

Electric vehicles are becoming ever increasing popular. The replacement in automobiles of the internal combustion engine, gear-shifting gearbox and fuel tank by an electric motor and battery packs brings about substantial saving in the space within the chassis above the wheels, thereby in theory opening up possibilities for redesigning of the chassis. However, simplification in the chassis design for electric vehicles has been rather limited, particularly design targeted for production and assembly at a reduced cost and/or improved flexibility.

The invention seeks to mitigate or to at least alleviate some of the aforesaid shortcomings by providing a new or otherwise improved chassis for an electric vehicle.

### SUMMARY OF THE INVENTION

According to the invention, there is provided a chassis for an electric vehicle, comprising a left side frame and a right side frame made of a material comprising carbon fibre, at least one lower structural member connected with and extending across the left side frame and the right side frame, and a plurality of upper structural members connected with and extending across the left side frame and the right side frame. The at least one lower structural member provides support for one or more rechargeable battery packs.

At least one of the left side frame and the right side frame may comprise a looped structure.

The looped structure may be integrally formed as a one-piece structure.

The looped structure may have a profile that is concave on its inner side facing inwardly of the chassis or convex on its outer side facing outwardly of the chassis.

The looped structure may have a single opening that may permit access of a person to the interior of the chassis.

The opening may be adapted to be fit with a door for closing the opening.

The looped structure may have a front side and a rear side, at least one of which front and rear sides may provide at least part of an arch for a respective ground-engageable wheel.

The looped structure may have an inner surface and connecting formations integrally formed on the inner surface for connection with at least one of the upper and lower structural members.

The left side frame and the right side frame may be made of a material comprising carbon fibre and plastic.

The material may comprise carbon fibre reinforced plastic.

The left side frame and the right side frame may be molded from carbon fibre reinforced plastic.

Said at least one lower structural member may have a generally planar shape.

The lower structural member may have a length that extends in a first direction over substantially the entire length of respective bottom parts of the left side frame and the right side frame.

The lower structural member may have a width that extends in a second direction transversely across the bottom parts of the left side frame and the right side frame.

The lower structural member may provide a bottom of the chassis.

The lower structural member may be solid as between upper and lower sides thereof over substantially the entire footprint of the bottom.

The lower structural member may have at least one cavity adapted to accommodate a rechargeable battery pack.

Said at least one cavity may extend in a or the second direction transversely across the left side frame and the right side frame.

Said at least one cavity may extend substantially across the entire width of the lower structural member.

Said at least one cavity may have an opening on at least one of two sides facing the left side frame and the right side frame respectively, through which opening a said rechargeable battery pack may be insertable or removable.

Said at least one cavity may have a said opening on each of the two sides facing the left side frame and the right side frame respectively.

The lower structural member may have a plurality of said cavities adapted to accommodate respective rechargeable battery packs, which cavities may be arranged sequentially along the length of the lower structural member.

At least some of the upper structural members may be provided by respective beams.

The beams may be provided by hollow extrusions made of metal or alloy.

The extrusions may be made of aluminum metal or aluminum alloy.

The beams may comprise, at least, front and rear beams provided at front and rear sides respectively of the left side frame and the right side frame, and first and second intermediate beams provided between, and at a relatively higher level than, the front and rear beams.

The front and first intermediate beams may define a windscreen area of the chassis, and the rear and second intermediate beams may define a rear window area thereof.

The front beam may provide or support a dashboard of a said electric vehicle.

The beams may include at least one extra beam arranged in close proximity to the lower structural member.

Said at least one extra beam may be arranged on or in engagement with the lower structural member.

The lower structural member may have on its upper surface a recess or groove, at least partially within which said at least one extra beam may be fitted.

The recess or groove and the cavity or cavities may be arranged at non-overlapping positions at the lower structural member.

The chassis may include an end panel member which is jointed with and extends across the left side frame and the right side frame at a respective end of the chassis.

The end panel member may have an outer portion exposed to the exterior and an inner portion that co-operates with an adjacent end of the lower structural member to define an enclosure for a wheel axle at the same end of the chassis.

The end panel member may comprise a front panel provided at a front end of the chassis.

The end panel member may comprise a rear panel provided at a rear end of the chassis.

The invention also provides an electric vehicle that incorporates the aforesaid chassis.

### BRIEF DESCRIPTION OF DRAWINGS

The invention will now be more particularly described, by way of example only, with reference to the accompanying drawings, in which:
Figure 1 is a front perspective view of an electric vehicle that incorporates a first embodiment of a chassis for an electric vehicle in accordance with the invention;
Figure 2 is a rear perspective view of the electric vehicle of Figure 1;
Figure 3 is a left side view of the electric vehicle of Figure 1;
Figure 4 is a top plan view of the electric vehicle of Figure 1;
Figure 5 is a front end view of the electric vehicle of Figure 1;
Figure 6 is a rear end view of the electric vehicle of Figure 1;
Figure 7 is a perspective view of the chassis of the electric vehicle of Figure 1;
Figure 8 is an exploded perspective view of the chassis of Figure 7;
Figure 9 is a perspective view of a second embodiment of a chassis for an electric vehicle in accordance with the invention;
Figure 10 is an exploded perspective view of the chassis of Figure 9;
Figure 11 is a perspective view of an electric vehicle similar to the aforesaid electric vehicle, showing a steering wheel and four seats in two rows therein;
Figure 12 is a left side view of the electric vehicle of Figure 11;
Figure 13 is a top plan view of the electric vehicle of Figure 11; and
Figure 14 is a front end view of the electric vehicle of Figure 11.

### DETAILED DESCRIPTION OF PREFERRED EMBODIMENTS

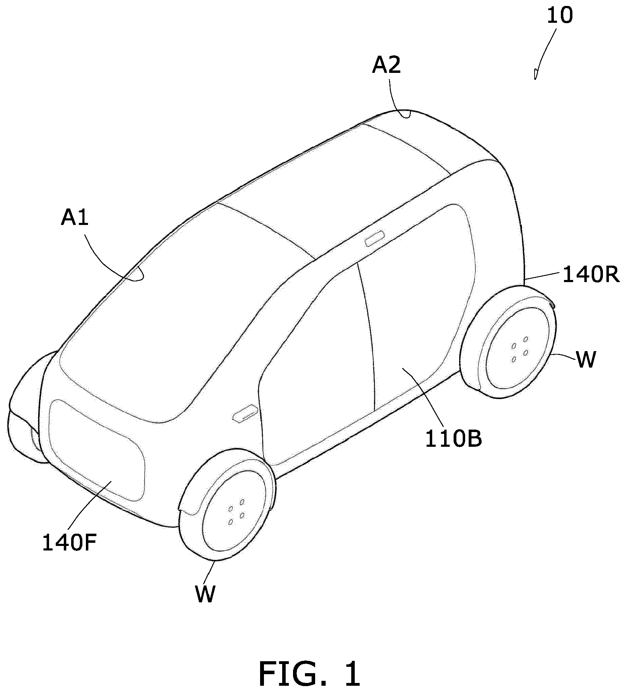

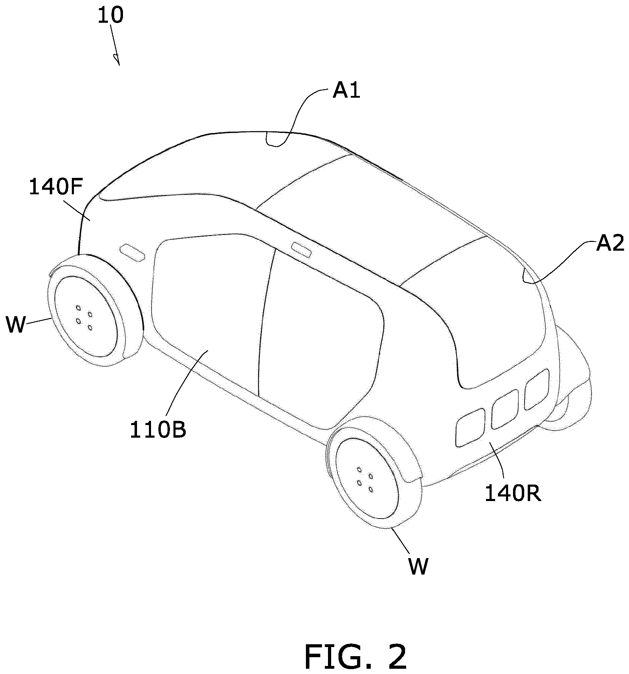

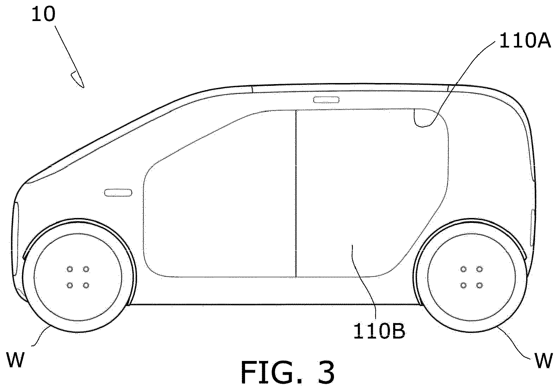

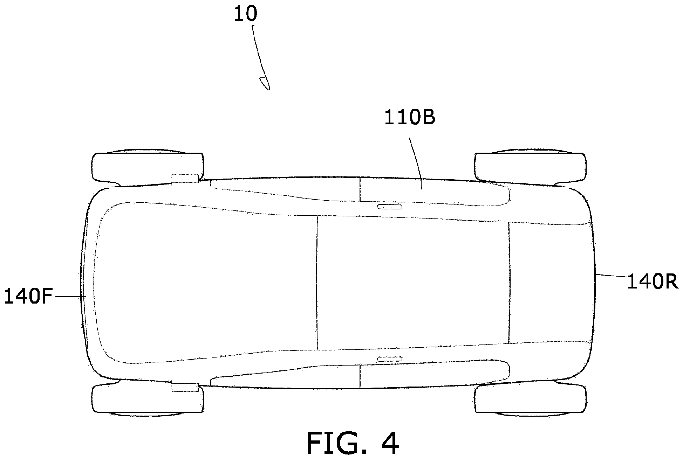

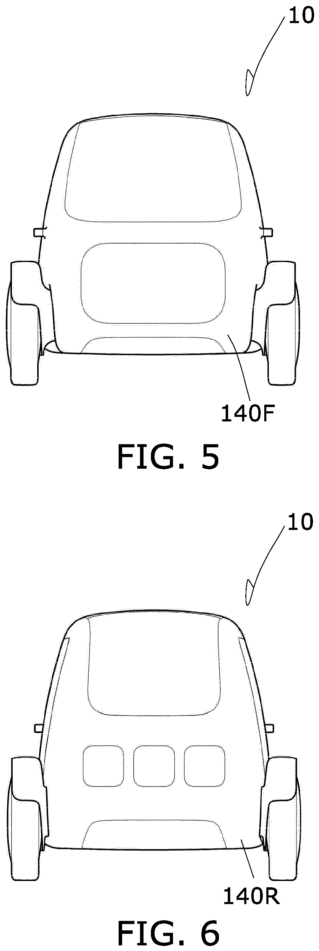

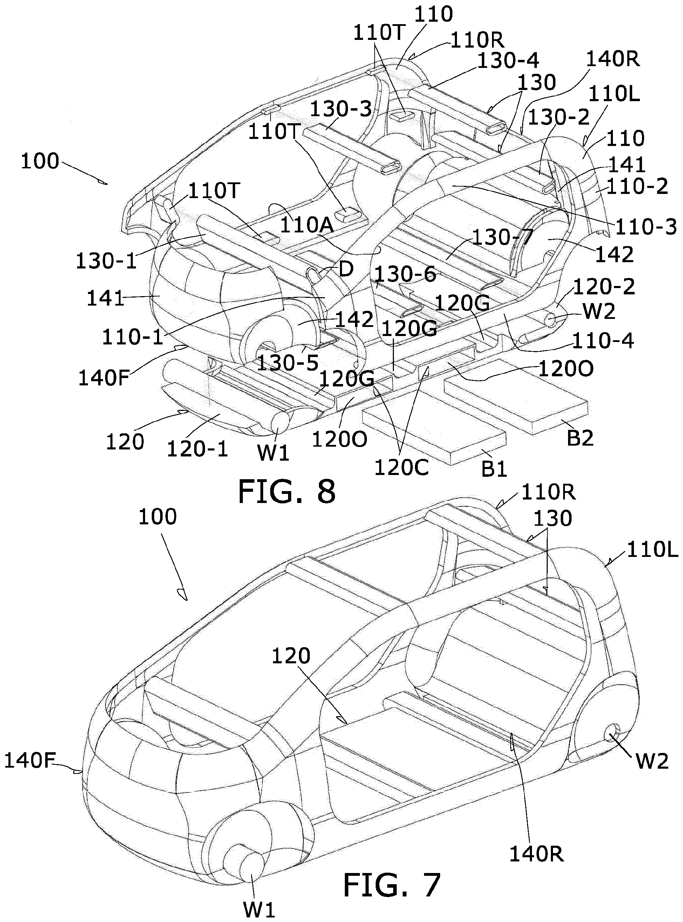

Referring initially to Figures 1 to 8 of the drawings, there is shown a first chassis 100 for an electric vehicle 10 embodying the invention, which is a vehicle for carrying passengers, or may be one for transporting goods e.g. a light goods van in a different embodiment. The chassis 100 has a left side frame 110L made of a material comprising carbon fibre, a right side frame 110R made of a material comprising carbon fibre, at least one lower structural member 120 connected with and extending across the left side frame 110L and the right side frame 110R, and a plurality of upper structural members 130 connected with and extending across the left side frame 110L and the right side frame 110R. The lower structural member 120 provides support for one or more, e.g. two, rechargeable battery packs B1 and B2.

At least one of the left side frame 110L and the right side frame 110R, or both side frames 110L and 110R in the described embodiment, comprise a looped structure 111. Each looped structure 110 is integrally formed as a one-piece structure for strengthen and in particular rigidity. They are made of a material comprising carbon fibre and also plastic and in particular carbon fibre reinforced plastic, and are molded from carbon fibre reinforced plastic.

Each of the left and right side frames 110L and 110R has an overall shape or profile that is concave on its inner side facing the interior of the chassis 100, and/or convex on its opposite outer side facing the exterior. Each looped structure 110 has a single opening 110A which permits access of a person to the interior of the chassis 100. The opening 110A is adapted to be fit with a door 110B for closing the opening 110A, functioning as a side door on the relevant side of the electric vehicle 10.

The opening 110A takes up the majority of the area of the looped structure 110, resulting in the looped structure 110 having four sides: front and rear sides 110-1 and 110-2 (shorter sides, also hereinafter referred to as ends) and top and bottom sides 110-3 and 110-4 (longer sides). These four sides 110-1 to 110-4 are in general slim, each having a cross-section that is smoothly curved and concave inwardly. Such a cross-section offers enhanced rigidity and strength compared to, for example, a planar cross-section.

The front and rear sides/ends 110-1 and 110-2 have their lower portions made in the shape of an arc to provide at least part of an arch for respective front and rear ground-engageable wheels W of the electric vehicle 10. Some and preferably each of the four sides 110-1 to 110-4 is integrally formed on its inner surface with one or more tabs 110T, which serve as connecting formations for connection with at least one and preferably all of the upper and lower structural members 130 and 120.

Turning to the lower structural member 120, it is of a generally planar rectangular shape having front and rear ends 120-1 and 120-2, and provides or acts as the bottom of the chassis 100. The lower structural member 120 has a length that extends in a first direction over substantially the entire length of respective bottom parts or sides 110-4 of the left side frame 110L and the right side frame 110R, and a width that extends in a second direction transversely across the bottom parts/sides 110-4 of the left side frame 110L and the right side frame 110R. The lower structural member 120 is solid as between upper and lower sides thereof over substantially the entire footprint of the bottom, i.e. lacking any through holes or apertures.

The lower structural member 120 is formed with at least one cavity, or preferably two cavities 120C as in the described embodiment, each of which cavities 120C is adapted to accommodate a respective rechargeable battery pack B1/B2. Each cavity 120C extends in the second direction transversely across the left side frame 110L and the right side frame 110R and, preferably for maximizing its size/volume, extends substantially across the entire width of the lower structural member 120.

Each cavity 120C has an opening 1200 on at least one of two sides facing the left side frame 110L and the right side frame 110R respectively, through which opening 1200 the relevant rechargeable battery pack B1/B2 is insertable for use or removable for maintenance/replacement. The battery pack B1/B2 occupies substantially the entire space inside the cavity 120C. The cavity 120C may have an opening 1200 on each of the two sides facing the left and right side frames 110L and 110R, such that the battery B1/B2 can be accessed on either side of the chassis 100.

As is in the case of the described embodiment, the lower structural member 120 has a plurality of, i.e. two or more, said cavities 120C to accommodate more than one rechargeable battery pack B1/B2 for maximizing the range of the electric vehicle 10. The cavities 1200 are arranged sequentially along the length of the lower structural member 120, with optimal separation between them for balance between the total capacity of battery packs B1/B2 on board and the strength/rigidity of the chassis 100.

Referring now to the upper structural members 130, at least some of which and, in the described embodiment, all of which are provided by respective beams 130 connected across the left and right frames 110L and 110R. There are seven beams 130, and they can be divided into two groups, i.e. upper beams 130-1 to 130-4 and lower beams 130-5 to 130-7. The beams 130 are provided by hollow extrusions, each having a generally flat oblong hollow cross-section. They are preferably made of metal or alloy and more preferably made of aluminum metal or aluminum alloy for their advantages in weight, rigidity and cost compared to other metals/alloys e.g. steel.

The upper group consists of front and rear beams 130-1 and 130-2 provided at front and rear sides/ends respectively of the left and right side frames 110L and 110R, and first and second intermediate beams 130-3 and 130-4 provided between, and at a relatively higher level than, the front and rear beams 130-1 and 130-2. The arrangement is such that the front and first intermediate beams 130-1 and 130-3 define a windscreen area A1 of the chassis 100, and the rear and second intermediate beams 130-4 and 130-2 define a rear window area A2 thereof.

Whilst all the other beams 130-2 to 130-6 extend flat horizontally, the front beam 130-1 is inclined with its cross-section at an acute angle of preferably 50° to 70° to the horizontal, thereby presenting a principal side facing the driver and for use as a dashboard D of the electric vehicle 10. The dashboard D may support a steering wheel and a torch-sensitive screen for various vehicle controls/settings as well as information display. To cater for this function, the front beam 130-1 is made relatively broader than the other beams 130-2 to 130-6.

All seven beams 130 are made to have generally the same length, subject to variations dependent on the profile and separation (including angle) between the front and rear side frames 110L and 110R. The ends of the beams 130 are open and angled to fit over the integral tab 110T on the inner surfaces of the left and right side frames 110L and 110R, whilst matching the inner surfaces' profile, for connection with side frames 110L and 110R. The connection can be fixed or secured in a number of ways, such as by bolts and nuts, glue or any other suitable fixing means. Like the beams 130 (i.e. upper structural members), the lower structural member 120 may be connected with the side frames 110L and 110R in the same way (as described in relation to the second chassis 100' below).

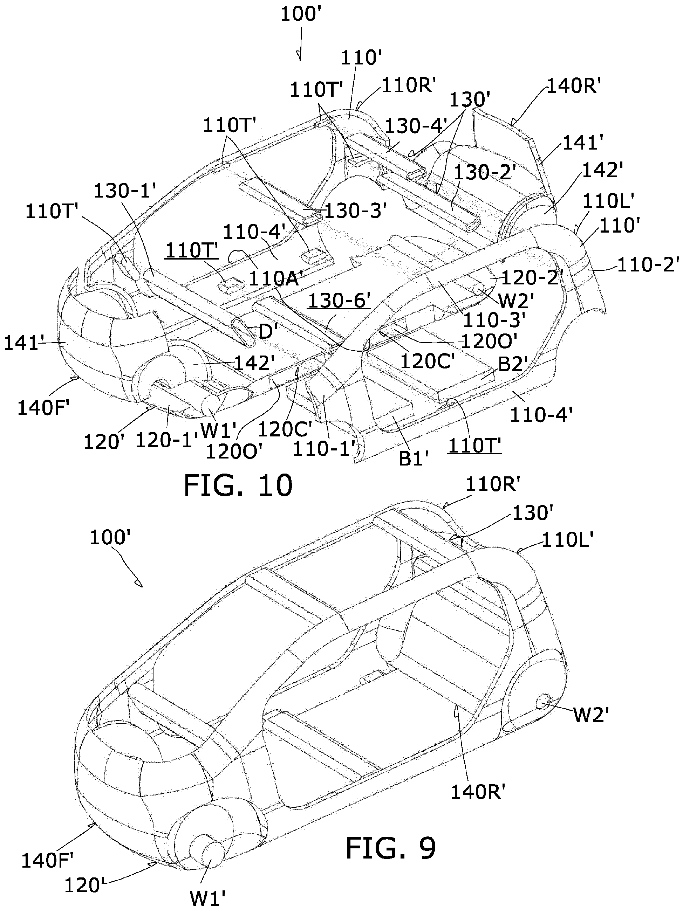

In the lower group, there are three beams 130-5 to 130-7 (or at least one beam, as in the second embodiment shown in Figures 9 and 10) which are arranged in close proximity to the lower structural member 120. More specifically, the three beams 130-5 to 130-7 are arranged on or in engagement with the lower structural member 120. In this regard, the lower structural member 120 is formed, on its upper surface, with a set of three recesses or grooves 120G which extends transversely across the entire width of the lower structural member 120. The three beams 130-5 to 130-7 are fitted at least partially within the grooves 120G respectively, with the purpose of reinforcing and/or cooperating with the lower structural member 120 in forming the bottom of the chassis 100 with parameters meeting the requirements in terms of strength and rigidity for vehicle performance and safety concerns.

In order not to compromise the strength of the lower structural member 120 and/or the space therein available for holding battery packs, the recesses or grooves 120G (for receiving the lower beams 130-5 to 130-7) are positioned not to overlap or stack with the cavities 120C (for receiving the battery packs B1 and B2).

The chassis 100 is to be completed with front and rear end panel members 140F and 140R, which are molded from carbon fibre reinforced plastic as the side frames 110L and 110R. The front and rear end panel members 140F and 140R are each connected with, and extend across, the left and right side frames 110L and 110R at the front and rear ends of the chassis 100 respectively. In general, the front end panel member 140F provides a front panel at the front end of the chassis 100, and the rear end panel member 140R provides a rear panel at the rear end thereof.

The front end panel member 140F is jointed with its left and right sides to, and lying flush with, the front sides/ends 110-1 of the side frames 110L and 110R (i.e. looped structures 110). The rear end panel member 140R is jointed with its left and right sides to, and lying flush with, the rear sides/ends 110-2 of the side frames 110L and 110R. This completes the periphery of the chassis 100. The two end panel members 140F and 140R are also connected with the front and rear ends 12-1 and 120-2 respectively of the lower structural member 120 below.

Each of the front and rear end panel members 140F/140R has an outer panel portion 141 exposed to the exterior and an inner base portion 142 behind the panel portion 141. The panel portion 141 is the part of the end panel member 140F/140R which is jointed with the two side frames 110L and 110R. The base portion 142 has a horizontally-extending part-cylindrical shell-like configuration that closes upon the adjacent front/rear end 120-1/120-2 of the lower structural member 120, together defining an enclosure for a front/rear wheel axle W1/W2 (shown schematically) and related electric motor (not shown) for rotating the wheel axle W1/W2 at the same end of the chassis 100.

Aluminum metal/alloy is the preferred choice of material for the fabrication of the lower structural member 120 and the front and rear end panel members 140F and 140R.

Reference is now made to Figure 9 and 10, which shows a second chassis 100' for an electric vehicle 10 embodying the invention, which chassis 100' has generally the same construction and is assembled in generally the same way as the first chassis 100 described above, with equivalent parts designated by the same reference numerals suffixed by an apostrophe. There is one major difference that lies in absence of using distinct upper structural members 130' (of the lower group) in close proximity to the lower structural member 120'. Three such upper structural members 130' are omitted, and they correspond to the beams 130-5 to 130-7 in the first chassis 100.

In the second chassis 100', the left and right side frames 110L' and 110R' are connected at their bottom parts/sides 110-4' by only the lower structural member 120'. This results in a slightly simplified construction, and is possible for the reason that the lower structural member 120' is a considerably larger piece of component which alone is sufficiently strong in providing the necessary rigidity.

As shown in Figure 10, the upper surface of the lower structural member 120' may be shaped across the middle to include integrally a flat rectangular-sectioned rib 130-6' that closely resembles the middle beam 130-6 as in the first chassis 100. This clearly illustrates that the lower structural member 120' may be connected with the side frames 1101' and 110R' likewise using the tabs 110T' on the side frames' bottom sides 110-4', see in particular the two tabs 110T' for connection with opposite ends of the rib 130-6', which is an integral part of the lower structural member 120'.

In general, it is understood that either one or more than one structural member 120/130 connecting the two side frames 110L and 110R across the bottom are possible and anticipated.

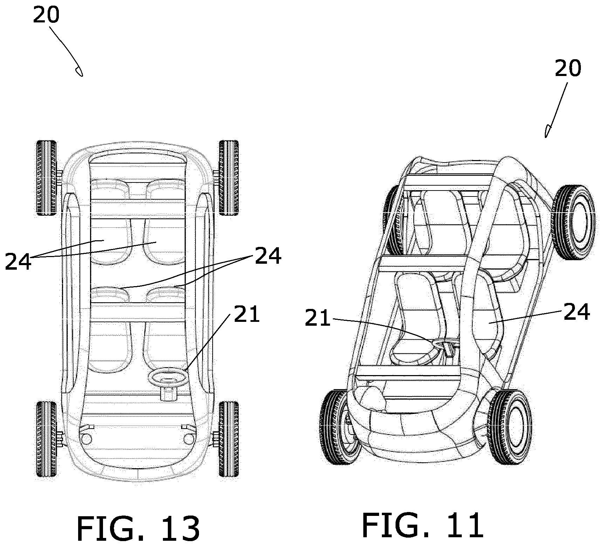

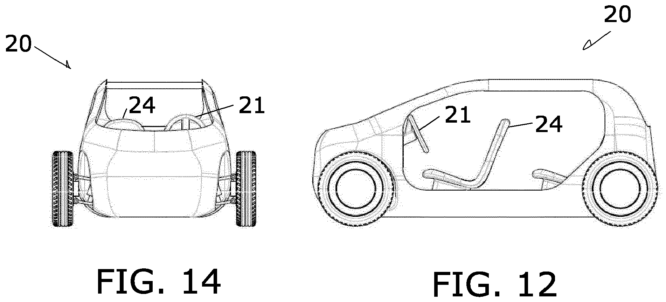

Figures 11 to 14 show an electric vehicle 20 similar to the aforesaid electric vehicle 10, in which there is seen a steering wheel 21 connected to the dashboard D and four seats 24 arranged in two rows.

The invention provides a chassis for an electric vehicle, which has a unique construction that facilitates assembly and yet offers sufficient strength and/or rigidity.

The invention has been given by way of example only, and various modifications of and/or alterations to the described embodiments may be made by persons skilled in the art without departing from the scope of the invention as specified in the appended claims.

## Claims

1. A chassis for an electric vehicle, comprising:
a left side frame made of a material comprising carbon fibre;
a right side frame made of a material comprising carbon fibre;
at least one lower structural member connected with and extending across the left side frame and the right side frame, said at least one lower structural member providing support for one or more rechargeable battery packs; and
a plurality of upper structural members connected with and extending across the left side frame and the right side frame.

2. The chassis as claimed in claim 1, wherein at least one of the left side frame and the right side frame comprises a looped structure; and, optionally,
wherein the looped structure is integrally formed as a one-piece structure; and/or
wherein the looped structure has a profile that is concave on its inner side facing inwardly of the chassis or convex on its outer side facing outwardly of the chassis.

3. The chassis as claimed in claim 2, wherein the looped structure has a single opening that permits access of a person to the interior of the chassis; and, optionally,
wherein the opening is adapted to be fit with a door for closing the opening.

4. The chassis as claimed in claim 2 or claim 3, wherein the looped structure has a front side and a rear side, at least one of which front and rear sides provides at least part of an arch for a respective ground-engageable wheel.

5. The chassis as claimed in any one of claims 2 to 4, wherein the looped structure has an inner surface and connecting formations integrally formed on the inner surface for connection with at least one of the upper and lower structural members.

6. The chassis as claimed in any one of claims 1 to 5, wherein the left side frame and the right side frame are made of a material comprising carbon fibre and plastic; and, optionally,
wherein the material comprises carbon fibre reinforced plastic; and/or
wherein the left side frame and the right side frame are molded from carbon fibre reinforced plastic.

7. The chassis as claimed in any one of claims 1 to 6, wherein said at least one lower structural member has a generally planar shape; and, optionally,
wherein the lower structural member has a length that extends in a first direction over substantially the entire length of respective bottom parts of the left side frame and the right side frame; and/or
wherein the lower structural member has a width that extends in a second direction transversely across the bottom parts of the left side frame and the right side frame; and/or
wherein the lower structural member provides a bottom of the chassis; and/or
wherein the lower structural member is solid as between upper and lower sides thereof over substantially the entire footprint of the bottom.

8. The chassis as claimed in any one of claims 1 to 7, wherein the lower structural member has at least one cavity adapted to accommodate a rechargeable battery pack; and, optionally,
wherein said at least one cavity extends in a or the second direction transversely across the left side frame and the right side frame; and/or
wherein said at least one cavity extends substantially across the entire width of the lower structural member.

9. The chassis as claimed in claim 8, wherein said at least one cavity has an opening on at least one of two sides facing the left side frame and the right side frame respectively, through which opening a said rechargeable battery pack is insertable or removable; and, optionally,
wherein said at least one cavity has a said opening on each of the two sides facing the left side frame and the right side frame respectively.

10. The chassis as claimed in claim 8 or claim 9, wherein the lower structural member has a plurality of said cavities adapted to accommodate respective rechargeable battery packs, which cavities are arranged sequentially along the length of the lower structural member.

11. The chassis as claimed in any one of claims 1 to 10, wherein at least some of the upper structural members are provided by respective beams; and, optionally,
wherein the beams are provided by hollow extrusions made of metal or alloy; and/or
wherein the extrusions are made of aluminum metal or aluminum alloy.

12. The chassis as claimed in claim 11, wherein the beams comprise, at least, front and rear beams provided at front and rear sides respectively of the left side frame and the right side frame, and first and second intermediate beams provided between, and at a relatively higher level than, the front and rear beams; and, optionally,
wherein the front and first intermediate beams define a windscreen area of the chassis, and the rear and second intermediate beams define a rear window area thereof; and/or
wherein the front beam provides or supports a dashboard of a said electric vehicle.

13. The chassis as claimed in claim 11 or claim 12, wherein the beams include at least one extra beam arranged in close proximity to the lower structural member; and, optionally,
wherein said at least one extra beam is arranged on or in engagement with the lower structural member; and/or
wherein the lower structural member has on its upper surface a recess or groove, at least partially within which said at least one extra beam is fitted; and/or
wherein the recess or groove and the cavity or cavities are arranged at non-overlapping positions at the lower structural member.

14. The chassis as claimed in any one of claims 1 to 13, including an end panel member which is jointed with and extends across the left side frame and the right side frame at a respective end of the chassis; and, optionally,
wherein the end panel member has an outer portion exposed to the exterior and an inner portion that co-operates with an adjacent end of the lower structural member to define an enclosure for a wheel axle at the same end of the chassis; and/or
wherein the end panel member comprises a front panel provided at a front end of the chassis; and/or
wherein the end panel member comprises a rear panel provided at a rear end of the chassis.

15. An electric vehicle that incorporates the chassis as claimed in any one of the preceding claims.
